# EUROPEAN PATENT SPECIFICATION

(11) **EP 1 083 030 B1**
(45) Date of publication and mention of the grant of the patent: **04.04.2007**
(21) Application number: 00307774.0
(22) Date of filing: 08.09.2000
(51) Int. Cl.: B25J 19/00

(54) **Robot with devices for guiding a wiring member and/or a tubing member**
Roboter mit Vorrichtungen zum Führen eines Kabels und / oder eines Schlauches
Robot muni de dispositifs pour guider un câble et/ou un tuyau

(30) Priority: 09.09.1999 JP 25549799
(43) Date of publication of application: 14.03.2001
(73) Proprietor: FANUC LTD, Minamitsuru-gun, Yamanashi 401-0597 (JP)
(72) Inventor: Okada, Takeshi, Room 10-306, FANUC Manshonharimomi, Minamitsuru-gun, Yamanashi 401-0511 (JP); Uchida, Hiroshi, Rm 14-503, FANUC Manshonharimomi, Minamitsuru-gun, Yamanashi 401-0511 (JP)
(74) Representative: Billington, Lawrence Emlyn

(56) References cited:
- DE-U- 8 814 906
- DE-U- 9 217 659
- DE-U- 29 720 048
- JP-U- 3 103 193
- US-A- 4 507 042
- US-A- 4 705 243
- PATENT ABSTRACTS OF JAPAN vol. 017, no. 664 (M-1523), 8 December 1993 (1993-12-08) -& JP 05 220689 A (FANUC LTD), 31 August 1993 (1993-08-31)

## Description

This invention relates to an industrial robot provided with devices for guiding a pipe or a cable connected to an end effector at the free end or tip of the robot wrist.

Generally, in an industrial robot, an end effector suitable for various jobs is mounted to a wrist at the tip of an arm, and a tubing member or a wiring member for supply of power and liquid and supply and exhaust of air is connected to the end effector .

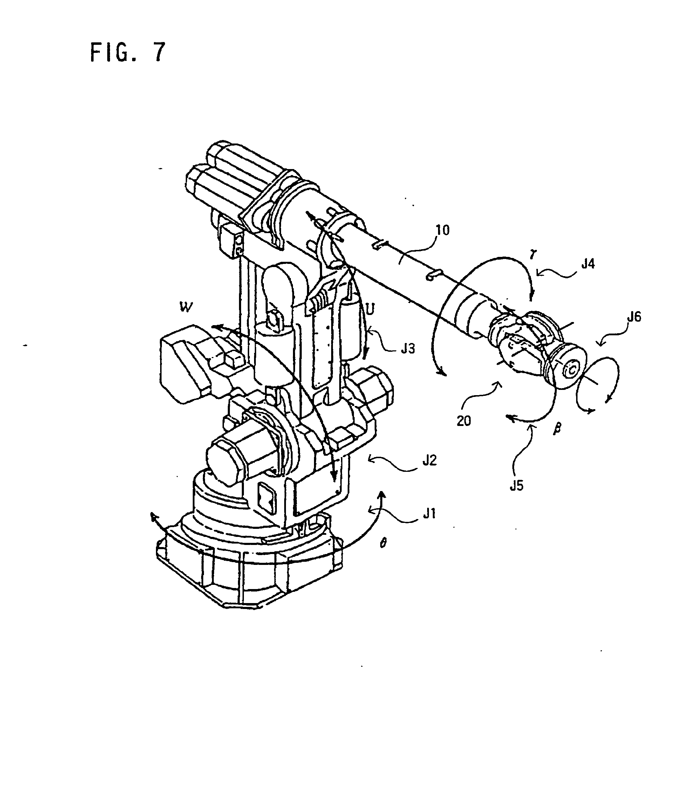

Fig. 7 shows the configuration of a six-axis robot as an example of an industrial robot. The six-axis robot fixed to an installation surface as shown in Fig. 7 is capable of turning at turning axes J1 to J6 at turning angles of θ, W, U, γ, β and α. This robot has a wrist 20 at the tip of an arm 10, and an end effector is mounted to the wrist 20.

In the prior art, taps or holes provided in required portions of the robot body for installation of the equipment are used for installation of a cable or like wiring member or a tube or like tubing member connected to the end effector.

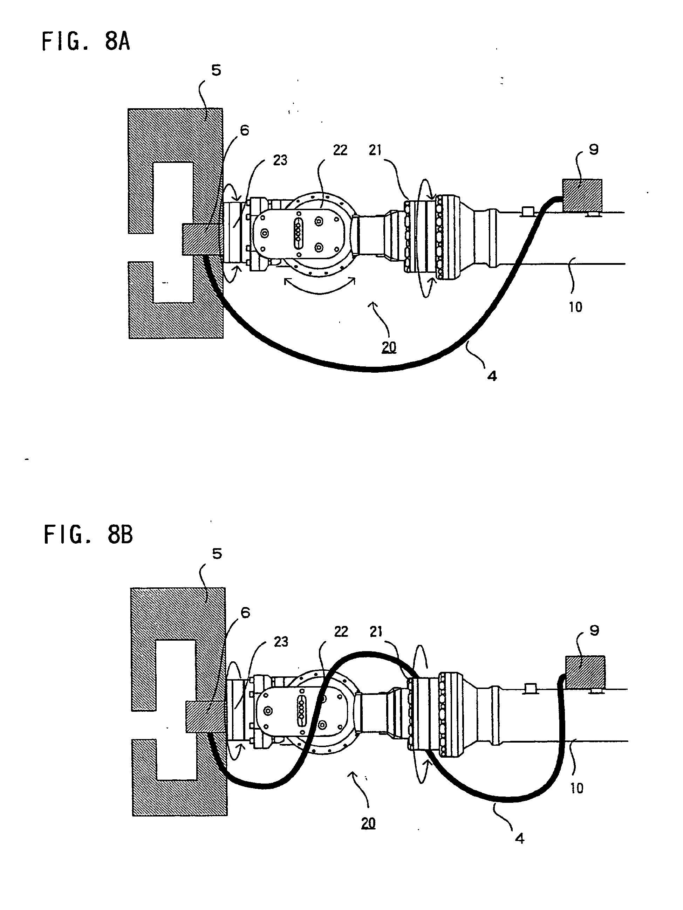

Fig. 8A illustrates the installation of the piping member or the wiring member in the prior art. In Fig. 8A, there is shown the state of the tubing member or the wiring member attached to the arm and the wrist at the tip of the arm. The wrist 20 has turning axes 21, 22 and 23 connected together, and these turning axes are different from one another in their axial directions of turning. An end effector 5 is mounted to one end of the wrist 20 so that it can turn about the turning axis 23 and also can be exchanged. Further, the other end of the wrist 20 is mounted to the arm 10 through the turning axis 21 so that the wrist 20 can turn.

The installation of the tubing member or the wiring member is made by supporting its intermediate portion with a clamping portion 9 fixed to the arm 10, while holding its end portion in place on a clamping portion 6 fixed to the end effector 5.

With the installation of the tubing member or the wiring member in the prior art, there is a problem in that the wiring member and/or the tubing member makes contact with a robot itself or its peripheral equipment to cause wear of the wiring member and/or the tubing member, resulting in a need for periodical maintenance.

Generally, when the turning axes of the wrist portion are actuated for wrist motion, the wiring member and/or the tubing member moves flexibly with respect to the arm according to the wrist motion. However, in the case of a wiring member and/or a tubing member of insufficient length, it is not possible to cope with the above flexible motion, resulting in restriction in carrying out the wrist motion. In this connection, the prior art is configured to meet the flexible motion of the wiring member and/or the tubing member by slackening the wiring member and/or the tubing member ranging from the arm to the end effector. Fig. 8A shows an installation with the wiring member and/or the tubing member slackened.

However, when each turning axis is turned for the wrist motion, the slack of the wiring member and/or the tubing member causes contact of the wiring member and/or the tubing member with the robot itself or its peripheral equipment. Further, it is feared that the wiring member and/or the tubing member gets twisted round the wrist portion to restrict carrying out of the wrist motion, depending on the previous motions of the wrist.

Further, the slack in the wiring member and/or the tubing member has to be adjusted for every robot. Thus, there is also a problem in that much time is required for the installation of the wiring member and/or the tubing member.

Fig. 8B shows the progress of one motion, in which turning of the turning axes 21, 23 causes contact of the slack portion of the wiring member and/or the tubing member with the wrist portion.

It is an object of the present invention to prevent a wiring member and/or a tubing member from interfering with a robot itself or its peripheral equipment.

Previous attempts have been made to provide a robot comprising a guide device for a wiring member and/or a tubing member connected to an end effector at the end of a wrist of the robot, in an attempt to prevent the wiring and/or tubing member from interfering with the robot itself or with its peripheral equipment.

Examples of robots comprising wiring/tubing guide devices are provided by JP 03103193 U which discloses a robot according to the preamble of attached claim 1, and US 4507042 A, US 4705243 A and DE 8814906 U, which disclose robots with wiring/tubing guide devices of other different types.

The present invention relates to a robot as defined in attached claim 1, comprising devices for guiding a wiring member and/or a tubing member connected to an end effector at the tip of a robot wrist via a robot arm. The is guide devices are adapted to attach a cord-like body such as a wiring member or a tubing member to the robot, more particularly, to an arm and a wrist portion. The cord-shaped body may include only a wiring member or a tubing member, or a bundle of both the wiring member and the tubing member, or a body formed by housing the wiring member and the tubing member in one tube. Further, each wiring member or tubing member may be configured in a bundle of wiring members or tubing members or a body formed by housing the wiring members or the tubing members in one tube, without being limited to a single wiring member or a single tubing member.

Each guide device for the wiring member and/or the tubing member comprises a clamping device having a support portion and a clamping portion capable of loose motion with respect to the support portion and adapted to clamp the wiring member and/or the tubing member. In mounting the clamping device to the robot, the support portion is disposed on a robot portion, and the direction of free motion of the clamping portion may be aligned to be transverse to the drive axis direction of the robot portion, on which the support portion is disposed.

The arrangement of a guide device of the present invention is determined such that the direction of free motion of the clamping portion and the drive axis direction of the robot portion, on which the support portion is disposed, may cross each other in mounting the clamping device to the robot portion. With the above configuration, when the wiring member and/or the tubing member expand and contract with respect to the arm, free motion of the clamping portion occurs. The free motion of the clamping portion makes it possible to displace the wiring member and/or the tubing member according to the wrist motion without making contact with the robot or its peripheral equipment. Thanks to the displacement of the wiring member and/or the tubing member, the robot may perform a smooth wrist motion.

The robot portion, on which a support portion is disposed, may be an arm, a turning portion or the like, and the free motion of the clamping portion may include a translation motion and a turning motion. A guide device of the present invention may take various modes on the basis of the robot portion and the state of free motion. Incidentally, the angle between the direction of free motion of the clamping portion and the drive axis direction of the robot portion can be arbitrary, without being limited to a right angle. Depending on this angle, force applied to the wiring member and/or the tubing member as the result of its flexible motion is resolved into its components in the directions of free motion of the clamping portion, causing the clamping portion to move freely. Consequently, the wiring member and/or the tubing member is prevented from interfering with the robot or its peripheral equipment.

In a first type of clamping device, a mounting portion of the clamping device is set on the arm side, a base is adapted for the support portion, and the clamping portion to clamp the wiring member and/or the tubing member is configured to be guided in a linear direction with respect to the base and is also capable of turning about an axis perpendicular to the slide direction. Then, the base is disposed on the arm with the sliding direction of the clamping portion substantially aligned with the longitudinal direction of the arm.

According to the first type of clamping device, flexing motion of the wiring member and/or the tubing member causes the clamping portion to slide and turn with respect to the arm so that the wiring member and/or the tubing member is displaced to a position free from interference with the robot and its peripheral equipment, according to the wrist motion. Thus, the wiring member and/or the tubing member can be prevented from interfering with the robot and its peripheral equipment, permitting a smooth wrist motion.

In a second type of clamping device, a mounting portion of the clamping device is set on the arm side, a revolving unit capable of free motion along the circumference is adapted to be a support portion, and the clamping portion to clamp the wiring member and/or the tubing member is configured to be capable of turning about an axis which connects the revolving center of the revolving unit and the clamping portion . Then, the clamping portion is placed on the arm with the revolving unit disposed on the circumference of the arm.

According to the second type of clamping device, flexible motion of the wiring member and/or the tubing member causes the clamping portion to revolve and turn with respect to the arm so that the wiring member and/or the tubing member is displaced to a position free from interference with the robot and its peripheral equipment according to the wrist motion. Thus, the wiring member and/or the tubing member can be prevented from interfering with the robot and its peripheral equipment, permitting a smooth wrist motion.

In a third type of clamping device, a mounting portion of the clamping device is set on the wrist side, a base is adapted for the support portion, and the clamping portion to clamp the wiring member and/or the tubing member is configured to be capable of turning about an axis perpendicular to the installation surface of the base. Then, the clamping portion is placed on the wrist or a wrist casing such that the turning axis of the clamping portion may be aligned with or in parallel to the swing axis of the wrist.

According to the third type of clamping device, flexible motion of the wiring member and/or the tubing member causes the clamping portion to turn with respect to the wrist so that the wiring member and/or the tubing member is displaced to a position free from interference with the robot and its peripheral equipment according to the wrist motion. Thus, the tubing member and/or the wiring member can be prevented from interfering with the robot and its peripheral equipment, permitting a smooth wrist motion.

In a fourth type of clamping device, a mounting portion of the clamping device is set on the arm side, a movable unit capable of revolution and sliding along a cylindrical surface is adapted for the support portion, and the clamping portion to clamp the wiring member and/or the tubing member is configured to be capable of turning about an axis which connects the revolving center of the movable unit and the clamping portion . Then, the clamping portion is placed on the arm with the movable unit disposed on the circumference of the arm.

According to the fourth type of clamping device, flexible motion of the wiring member and/or the tubing member causes the clamping portion to revolve, slide and turn with respect to the arm so that the wiring member and/or the tubing member is displaced to a position free from interference with the robot and its peripheral equipment according to the wrist motion. Thus, the wiring member and/or the tubing member can be prevented from interfering with the robot and its peripheral equipment, permitting a smooth wrist motion.

Incidentally, in a robot such has been described hereinbefore, the wiring member and/or the tubing member can be attached to the translation axis or the turning axis of the robot without being limited to the arm and the wrist portion.

In the present invention, the wear caused by contact of the wiring member and/or the tubing member with the robot itself and its peripheral equipment can be reduced by preventing the wiring member and/or the tubing member from interfering with the robot itself and its peripheral equipment, allowing maintenance operations of the robot and the wiring member and/or the tubing member to be reduced. Further, the life of the robot and the wiring member and/or the tubing member can be extended, permitting less running cost.

Furthermore, the time taken for the installation of the wiring member and/or the tubing member can be reduced, permitting less cost to be required for alteration of a system including the robot.

For a better understanding of the invention and to show how the same can be carried with effect, reference will now be made, by way of example only, to the accompanying drawings, wherein:
Figs. 1A and 1B are views respectively showing a robot according to the present invention;
Figs. 2A to 2C illustrate a first clamping device for use in the robot of Fig. 1A:
Figs. 3A and 3B illustrate a second clamping device for use in the robot of Fig. 1A:
Figs. 4A to 4C illustrate a third clamping device for use in the robot of Fig. 1A;
Figs. 5A and 5B are views showing a second embodiment of the robot according to the present invention;
Figs. 6A and 6B illustrate a fourth clamping device being for use in the robot of Fig. 5A;
Fig. 7 is a view showing an industrial robot in the prior art; and
Fig. 8 illustrates the posture of a wiring member or a piping member connected to an end effector of a robot of the prior art.

An industrial robot having six axes, for instance, may have the configuration as shown in Fig. 7. In the robot shown, arms actuated for turning or translation motion with a plurality of turning axes or translation axes are connected to a robot body fixed to an installation surface. An end effector may be mounted to a wrist 20 at the tip of the arm 10 so that it can be replaced as desired.

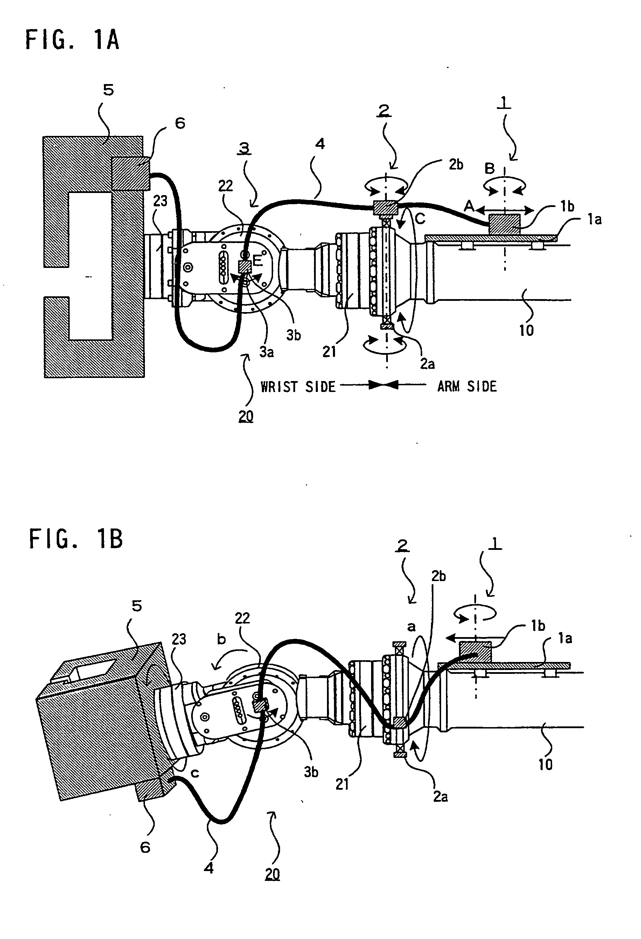

In Fig. 1A, the arm 10 has a wrist 20 mounted at the end and having a plurality of turning axes. The wrist 20 has a first turning axis 21, a second turning axis 22 and a third turning axis 23 mounted in this order from the side of the arm 10, and the end effector 5 is mounted to the third turning axis 23 so that it can be readily replaced. Incidentally, the first turning axis 21 and the second turning axis 22 and also the second turning axis 22 and the third turning axis 23 are to cross each other at right angles.

The wrist 20 can undergo a swinging motion according to a swing angle of the second turning axis 22.

The robot shown in Fig. 1A is provided with guiding devices comprising a first guide device 1, a second guide device 2 and a third guide device 3. These guide devices support the wiring member and/or the tubing member 4 attached to the end effector 5 mounted at the tip of the wrist 20, and are also adapted to guide the wiring member and/or the tubing member by varying the relation between the position of the wiring member and/or the tubing member and that of each guide device according to the wrist motion.

The first guide device 1 has a base 1a also serving as a sliding unit and a turning clamping portion 1b and is placed on the arm 10.

The second guide device 2 has a revolving unit 2a and a turning clamping portion 2b and is placed adjacent to the first turning axis 21 in the neighborhood of the wrist 20 of the arm 10. The third guide device 3 has a base 3a and a turning clamping portion 3b and is placed on the third turning axis 23.

The wiring member and/or the tubing member 4 is clamped and is also supported so as to be capable of free motion by the respective clamping portions of the first guide device 1, the second guide device 2 and the third guide device 3. The end portion of the wiring member and/or the tubing member is supported by the clamp portion 6 when fixed in place on the end effector 5. With the above configuration, the wiring member and/or the tubing member can be displaced in association with the free motion including the turning motion and the translation motion of each guide portion according to the wrist motion.

Fig.1B shows the arrangement when the first turning axis 21, the second turning axis 22 and the third turning axis 23 in the wrist portion of the robot shown in Fig. 1A are turned respectively in a direction a, a direction b and a direction c.

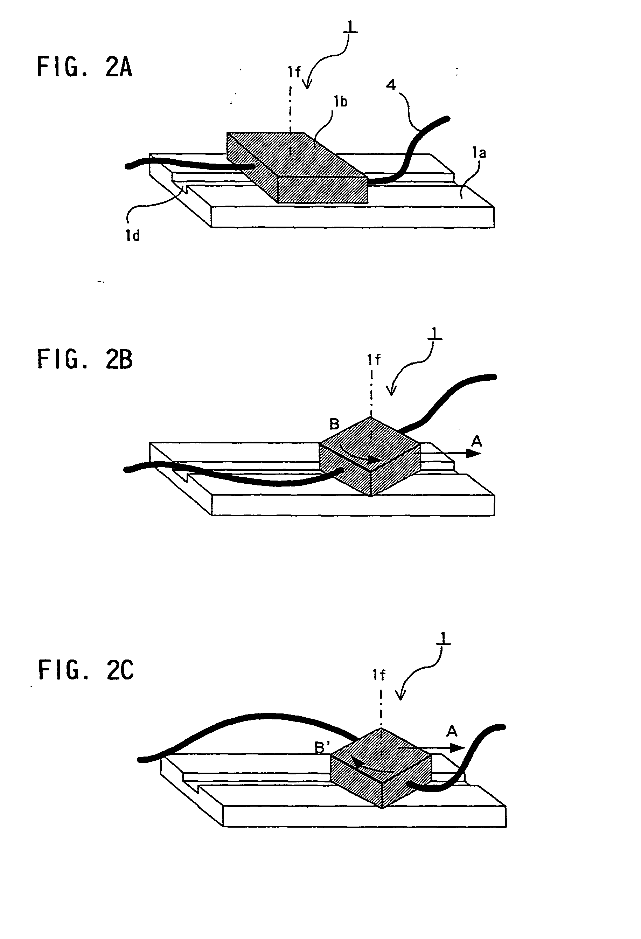

When there is turning about each turning axis of the wrist 20, the respective clamping portion s of the first guide device 1, the second guide device 2 and the third guide device 3 turn or perform translational motion. As a result, the wiring member and/or the tubing member 4 is held in place in a stable state without getting twisted round the arm 10 or the wrist 20. A description will now be given of the first guide device 1, the second guide device 2 and the third guide device 3 with reference to Figs. 2A to 4C.

The first guide device 1 has the base 1a and the turning clamping portion 1b, as shown in Fig. 2A. The base 1a also serves as the sliding unit, which causes the turning clamping portion 1b to perform the translational motion. A guide, such as a groove 1d formed in the base 1a, for instance, may be utilised to perform the translational motion of the turning clamping portion . The turning clamping portion 1b is adapted to clamp the wiring member and/or the tubing member 4 and is also configured to turn about an axis 1f. In the turning clamping portion 1b, the translation motion along the groove 1d and the turning motion about the axis 1f are caused by force applied from the wiring member and/or the tubing member 4 clamped by the turning clamping portion 1b.

The direction of the axis 1f of the turning clamping portion 1b is configured to cross the direction of translational motion of the sliding unit substantially at right angles. With the above configuration, the force applied by the tubing member 4 is resolved into components in the directions of translational motion and turning motion, permitting a smooth displacement of the wiring member and/or the tubing member 4.

Fig. 2B shows the arrangement when the turning clamping portion 1b of Fig. 2A performs the translational motion in the direction shown by an arrow A, and is also turned in the direction shown by an arrow B. In contrast with the case shown in Fig. 2B, Fig. 2C shows the arrangement when the turning clamping portion 1b of Fig. 2A performs the translational motion in the direction shown by an arrow A, and is also turned in the direction shown by an arrow B' (a direction opposite to the direction shown by the arrow B).

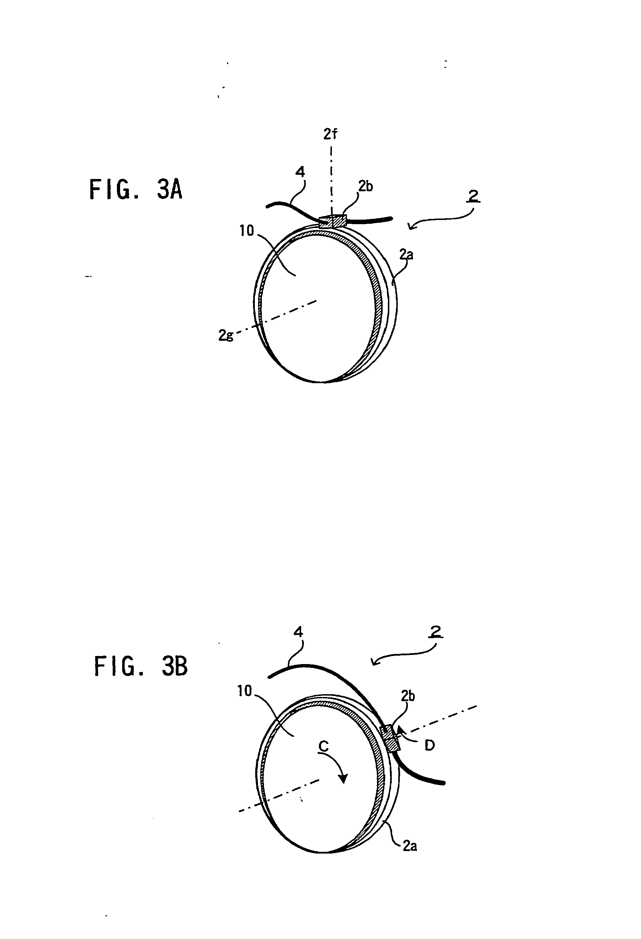

The second guide device 2 has the revolving unit 2a and the turning clamping portion 2b, as shown in Fig. 3A. The revolving unit 2a is adapted to turn the turning clamping portion 2b about the circumference of the arm 10. A bearing mechanism provided on the revolving unit 2a, for instance, may be employed to perform the turning motion of the turning clamping portion. The turning clamping portion 2b is adapted to clamp the wiring member and/or the tubing member 4 and is also configured to turn about an axis 2f. The turning motions of the revolving unit 2a and of the turning clamping portion 2b are caused by force applied by the wiring member and/or the tubing member 4 clamped by the turning clamping portion 2b.

An axis 2g of the revolving unit 2a crosses the axis 2f of the turning clamping portion 2b substantially at right angles. With the above configuration, the force applied by the tubing member 4 may be resolved into components in the turning directions of the revolving unit 2a and the turning clamping portion 2b, permitting a smooth displacement of the wiring member and/or the tubing member 4.

Fig. 3B shows an arrangement, in which the revolving unit 2a of Fig. 3A revolves in the direction shown by an arrow C and the turning clamping portion 2b is turned in the direction shown by an arrow D.

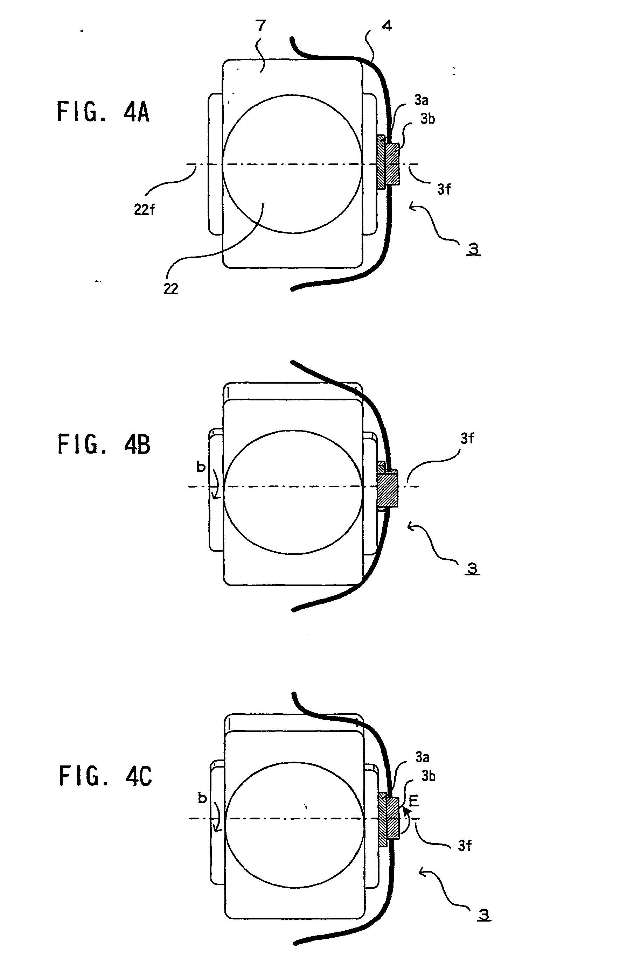

The third guide device 3 has the base 3a and the turning clamping portion 3b, as shown in Fig. 4A. The base 3a is fixed to the wrist or a wrist casing 7 to support the turning clamping portion 3b as it undergoes turning. The turning clamping portion 3b is adapted to clamp the wiring member and/or the tubing member 4 and is also configured to turn about an axis 3f. The turning motion of the turning clamping portion 3b is caused by force applied by the wiring member and/or the tubing member 4 clamped by the turning clamping portion 3b.

The axis 3f of the turning clamping portion 3b crosses the surface of the second turning axis 22 of the wrist 20 of the robot substantially at right angles such that the axis 3f may be aligned with or in parallel to the axis 22f of the second turning axis 22. With the above configuration, the force applied by the tubing member 4 may be resolved into components in the turning directions of the turning clamping portion 3b, permitting a smooth displacement of the wiring member and/or the tubing member 4.

Fig.4B shows an arrangement, in which the second turning axis 22 of Fig. 4A has been pivoted about the axis 22f in the direction shown by an arrow b. Fig. 4C shows the state, in which the turning clamping portion 3b has been pivoted about the axis 3f in the direction shown by an arrow E according to the pivotal motion of the second turning axis 22.

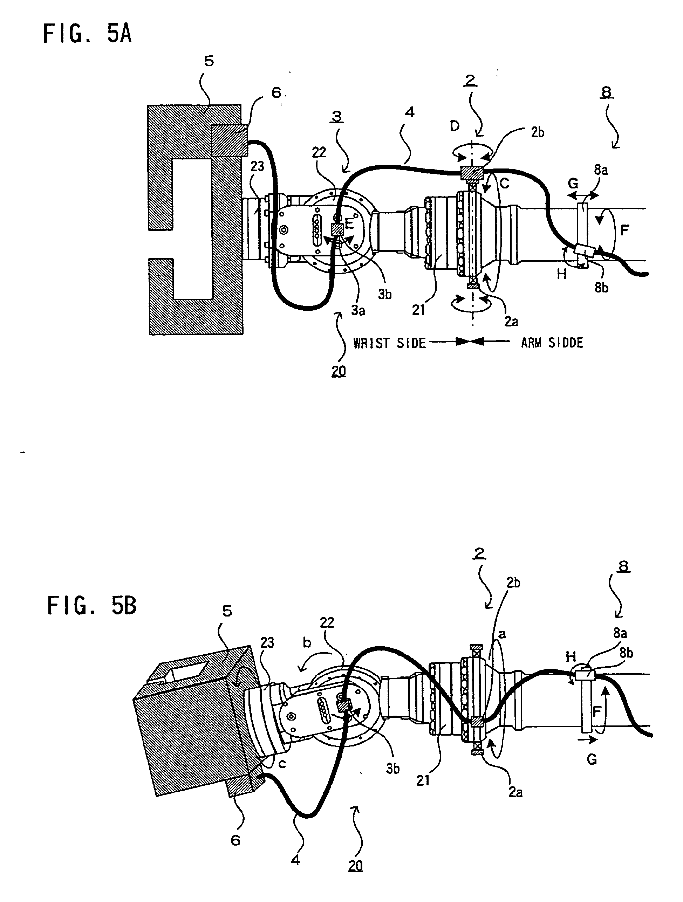

Fig. 5A shows a second embodiment of the robot according to the present invention. This second embodiment is different from the first embodiment of Fig. 1A in that a fourth guide device is used instead of the first guide device 1. Thus, the guiding devices of Fig. 5A comprises the second guide device, the third guide device and the fourth guide device.

The second guide device 2 has the revolving unit 2a and the turning clamping portion 2b and is placed adjacent to the first turning axis 21 in the neighborhood of the wrist 20 of the arm 10.

The third guide device 3 has the base 3a and the turning clamping portion 3b and is placed on the third turning axis 23.

The fourth guide device 8 has a movable unit 8a and a turning clamping portion 8b and is placed on the arm 10.

The wiring member and/or the tubing member 4 is clamped and is also supported by the respective clamping portions of the fourth guide device 8, the second guide device 2 and the third guide device 3 in a manner such that it can move freely. The end portion of the wiring member and/or the tubing member is fixedly supported with the clamping portion 6 of the end effector 5. With the above configuration, the wiring member and/or the tubing member can be displaced, such displacement including the turning motion and the translation motion of each guide portion according to the wrist motion, taking advantage of the aforesaid free motion.

Fig. 5B shows an arrangement, in which there is rotation about the first turning axis 21, the second turning axis 22 and the third turning axis 23 in the wrist portion of the robot shown in Fig. 5A in the direction a, the direction b and the direction c, respectively. When rotation occurs at each turning axis of the wrist 20, the respective clamping portion s of the fourth guide device 8, the second guide device 2 and the third guide device 3 turn (in the directions shown by arrows C, D, E, F and H in the drawing) or perform the translation motion (in the direction shown by an arrow G in the drawing). As a result, the wiring member and/or the tubing member is held in place in a stable state without getting twisted round the arm 10 or the wrist 20.

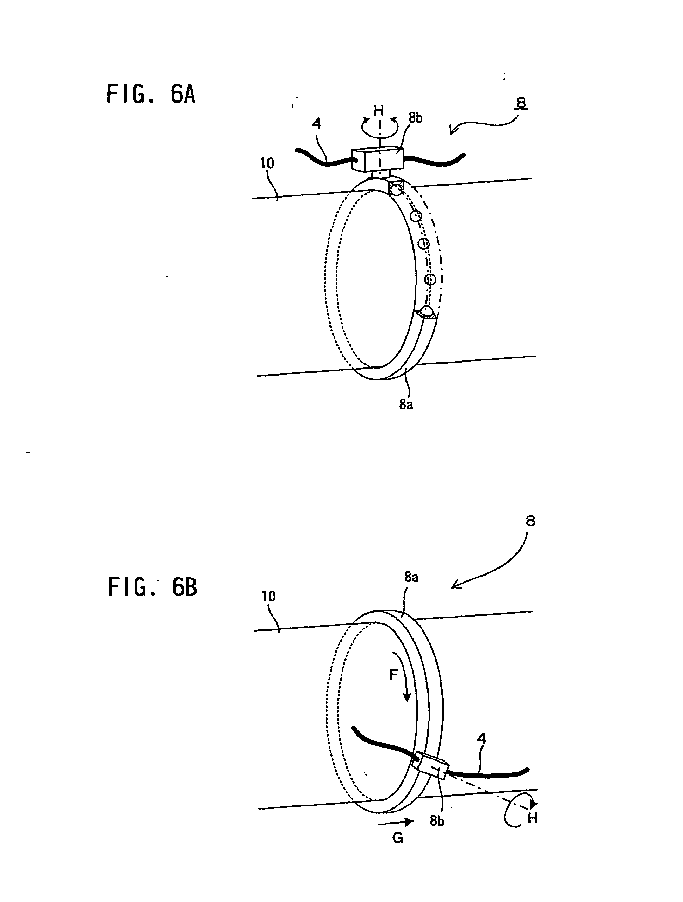

The fourth guide device 8 has the movable unit 8a and the turning clamping portion 8b, as shown in Fig. 6A. The movable unit 8a is adapted to cause the turning clamping portion 8b to travel along the circumference (shown by an arrow F in the drawing) of the arm 10 and also to slide in the longitudinal direction (shown by an arrow G in the drawing) of the arm 10. Balls provided in the movable unit 8a, for instance, are rolled on the cylindrical surface of the arm 10 to perform the turning and slide motions of the turning clamping portion 8b.

The turning clamping portion 8b is adapted to clamp the wiring member and/or the tubing member 4 and is also configured to turn about an axis (as indicated by an arrow H in the drawing). The turning motions of the movable unit 8a and the turning clamping portion 8b and the slide motion of the movable unit 8a are caused by force applied by the wiring member and/or the tubing member 4 clamped by the turning clamping portion 8b.

The axis of the movable unit 8a and that of the turning clamping portion 8b are placed to cross each other at substantially right angles. With the above configuration, the force applied from the wiring member and/or the tubing member 4 is resolved into components in the turning directions of the movable unit 8a and the turning clamping portion 8b and in the direction of the translation motion of the movable unit 8a, permitting a smooth displacement of the wiring member and/or the tubing member 4.

Fig. 6B shows an arrangement in which the movable unit 8a revolves in the direction shown by the arrow F and also slides in the direction shown by the arrow G. and the turning clamping portion 8b is turned in the direction shown by the arrow H.

As has been described in the foregoing, according to the present invention, it is possible to prevent a wiring member and/or a tubing member from interfering with the robot itself or its peripheral equipment.

## Claims

1. A robot comprising a wiring member and/or a tubing member (4) connected to an end effector (5) at the end of a wrist (20) of the robot, via an arm (10) of the robot, and devices for guiding the wiring member and/or the tubing member (4) comprising:
a clamping device (1, 8) having a base (1a, 8a) and a clamping portion (1b, 8b) adapted to clamp the wiring member and/or tubing member (4) to the arm (10), said clamping portion (1b, 8b) being arranged to translate linearly with respect to said arm (10);
wherein said clamping device (1, 8) is mounted to said robot by placing the base (1a, 8a) on the arm (10) such that the translation direction of the clamping portion (1b, 8b) is substantially aligned with the longitudinal direction of said arm (10);
**characterised in that**:
said clamping portion (1b, 8b) is further arranged to be capable of turning about an axis (B, H) perpendicular to the translation direction;
a further clamp device (3) is provided having a base (3a) and a clamping portion (3b) adapted to clamp the wiring member and/or tubing member (4), the clamping portion (3b) being arranged to be capable of turning about an axis (E) perpendicular to the installation surface of said base (3a) which is mounted to the robot by being placed on said wrist (3) or on a wrist casing such that the turning axis (E) of the clamping portion (3b) is aligned with or is parallel to a swing axis (b) of the wrist (3); and
another clamping device (2) is provided having a revolving unit (2a) fitted to a circumference of the arm (10) and arranged to be rotatable in the circumferential direction of said arm (10), and a clamping portion (2b) adapted to clamp the wiring member and/or tubing member (4), said clamping portion (2b) being provided on the circumference of said movable unit (2a) to be capable of turning about an axis (2f) in the radial direction of said movable unit (2a).

2. A robot according to claim 1, wherein in said clamping device (1) having a base (1a) placed on the robot arm (10), the clamping portion (1b) is configured to be guided to slide linearly with respect to its base (1a).

3. A robot according to claim 1, wherein in said clamping device (8) having a base (8a) placed on the robot arm (10), the base (8a) is provided in the form of a ring-shaped unit fitted to the circumference of the robot arm (10) and configured to be capable of revolving in the circumferential direction (F) of said robot arm (10), and also sliding in a direction (G) parallel to the axial centre of said robot arm (10).

## Patentansprüche

1. Roboter mit einem Drahtleitungs- und/oder einem Rohrleitungselement (4), das an einen Endeffektor (5) am Ende eines Roboterhandgelenks (20) über einen Roboterarm (10) angeschlossen ist, und Vorrichtungen zum Führen eines Drahtleitungs- und/oder Rohrleitungselementes (4), umfassend:
eine Klemmvorrichtung (1, 8) mit einer Basis (1a, 8a) und einem Klemmabschnitt (1b, 8b), der so ausgelegt ist, dass er das Drahtleitungs- und/oder Rohrleitungselement (4) am Arm (10) fest klemmt, wobei der Klemmabschnitt (1b, 8b) derart angeordnet ist, dass er sich linear in Bezug auf den Arm (10) verschiebt; wobei die Klemmvorrichtung (1, 8) am Roboter befestigt wird, indem die Basis (1a, 8a) derart am Arm (10) untergebracht wird, dass die Verschieberichtung des Klemmabschnitts (1b, 8b) im Wesentlichen zur Längsrichtung des Arms (10) ausgerichtet wird;
**dadurch gekennzeichnet, dass**:
der Klemmabschnitt (1b, 8b) weiterhin so angeordnet ist, dass er sich um eine Achse (B, H) senkrecht zur Verschieberichtung drehen kann;
eine weitere Klemmvorrichtung (3) bereitgestellt wird, bei der eine Basis (3a) und ein Klemmabschnitt (3b) so angepasst sind, dass sie das Drahtleitungs- und/oder Rohrleitungselement (4) fest klemmen, wobei der Klemmabschnitt (3b) derart angeordnet ist, dass er sich um eine Achse (E) senkrecht zur Installationsfläche der Basis (3a) drehen kann, die am Roboter befestigt wird, indem sie am Handgelenk (3) oder auf einem Handgelenk-Gehäuse untergebracht wird, so dass die Drehachse (E) des Klemmabschnitts (3b) zu einer Schwingachse (b) des Handgelenks (3) ausgerichtet wird oder parallel dazu ist; und
eine weitere Klemmvorrichtung (2) bereitgestellt wird, bei der eine Dreheinheit (2a) am Umfang von Arm (10) befestigt ist und die so angeordnet ist, dass sie sich in Umfangsrichtung von Arm (10) drehen lässt, und ein Klemmabschnitt (2b) so angepasst ist, dass er das Drahtleitungs- und/oder Rohrleitungselement (4) fest klemmt, wobei sich der Klemmabschnitt (2b) auf dem Umfang der beweglichen Einheit (2a) befindet, und er sich um eine Achse (2f) in Radialrichtung der beweglichen Einheit (2a) drehen lässt.

2. Roboter nach Anspruch 1, wobei bei der Klemmvorrichtung (1), deren Basis sich auf dem Roboterarm (10) befindet, der Klemmabschnitt (1 b) derart konfiguriert ist, dass er in Bezug auf seine Basis (1a) linear gleitend geführt wird.

3. Roboter nach Anspruch 1, wobei sich die Basis (8a) bei der Klemmvorrichtung (8) auf dem Roboterarm (10) befindet und sie die Form einer ringförmigen Einheit hat, die am Umfang des Roboterarms (10) befestigt ist und sie derart konfiguriert ist, dass sie sich in Umfangsrichtung (F) des Roboterarms (10) drehen lässt und ebenfalls in einer Richtung (G) parallel zur Achsmitte des Roboterarms (10) gleiten kann.

## Revendications

1. Robot comprenant un câble et/ou un tuyau (4) relié à un organe terminal effecteur (5) à l'extrémité d'un poignet (20) du robot, par un bras (10) de robot, et des dispositifs pour guider le câble et/ou le tuyau (4), comprenant :
un dispositif de serrage (1, 8) ayant une base (1a, 8a) et une portion de serrage (1b, 8b) apte à serrer le câble et/ou le tuyau (4) au bras (10), ladite portion de serrage (1b, 8b) étant agencée pour effectuer un mouvement de translation linéaire par rapport audit bras (10) ;
où ledit dispositif de serrage (1, 8) est monté sur ledit robot en plaçant la base (1a, 8a) sur le bras (10) de telle sorte que la direction de translation de la portion de serrage (1b, 8b) est sensiblement alignée avec la direction longitudinale dudit bras (10) ;
**caractérisé en ce que** :
ladite portion de serrage (1b, 8b) est en outre agencée pour pouvoir tourner autour d'un axe (B, H) perpendiculaire à la direction de translation ;
un autre dispositif de serrage (3) est prévu, présentant une base (3a) et une portion de serrage (3b) apte à serrer le câble et/ou le tuyau (4), la portion de serrage (3b) étant agencée pour pouvoir tourner autour d'un axe (E) perpendiculaire à la surface d'installation de ladite base (3a) qui est montée sur le robot en étant placée sur ledit poignet (3) ou sur un boîtier de poignet de telle sorte que l'axe de rotation (E) de la portion de serrage (3b) est aligné avec ou est parallèle à un axe de pivotement (b) du poignet (3) ; et
un autre dispositif de serrage (2) est prévu, comportant une unité de rotation (2a) montée sur une circonférence du bras (10) et agencée pour pouvoir tourner dans la direction circonférentielle dudit bras (10), et une portion de serrage (2b) apte à serrer le câble et/ou le tuyau (4), ladite portion de serrage (2b) étant réalisée sur la circonférence de ladite unité mobile (2a) pour pouvoir tourner autour d'un axe (2f) dans la direction radiale de ladite unité mobile (2a).

2. Robot selon la revendication 1, où dans ledit dispositif de serrage (1) ayant une base (1a) placée sur le bras de robot (10), la portion de serrage (1b) est configurée pour être guidée afin de coulisser linéairement par rapport à sa base (1a).

3. Robot selon la revendication 1, où dans ledit dispositif de serrage (8) ayant une base (8a) placée sur le bras de robot (10), la base (8a) est réalisée sous la forme d'une unité annulaire montée sur la circonférence du bras de robot (10) et configurée pour pouvoir tourner dans la direction circonférentielle (F) dudit bras de robot (10), et coulissant également dans une direction (G) parallèle au centre axial dudit bras de robot (10).
